# EUROPÄISCHE PATENTSCHRIFT

(11) **EP 4 078 094 B1**
(45) Veröffentlichungstag und Bekanntmachung des Hinweises auf die Patenterteilung: **25.02.2026**
(21) Anmeldenummer: 20771793.5
(22) Anmeldetag: 07.09.2020
(51) Int. Cl.: G01D 21/00, G08C 17/02

(54) **SENSOR ZUM ERZEUGEN VON POWERMANAGEMENTDATEN**
SENSOR FOR GENERATING POWER MANAGEMENT DATA
CAPTEUR PERMETTANT DE GÉNÉRER DES DONNÉES DE GESTION DE PUISSANCE

(30) Priorität: 17.12.2019 DE 102019219889
(43) Veröffentlichungstag der Anmeldung: 26.10.2022
(73) Patentinhaber: VEGA Grieshaber KG, 77709 Wolfach (DE)
(72) Erfinder: STAIGER, Holger, 78739 Hardt (DE); MOSER, Patrick, 77960 Seelbach (DE)
(74) Vertreter: Maiwald GmbH
(86) Internationale Anmeldenummer: PCT/EP2020/074964
(87) Internationale Veröffentlichungsnummer: WO 2021/121689

(56) Entgegenhaltungen:
- US-A1- 2008 221 836
- US-A1- 2016 047 679
- US-A1- 2017 276 527

## Beschreibung

### Gebiet der Erfindung

Die Erfindung betrifft die Prozessautomatisierung, insbesondere im industriellen Umfeld. Insbesondere betrifft die Erfindung einen, insbesondere selbstlernenden Sensor, eine Steuereinheit für einen solchen Sensor, ein Messsystem mit einem oder mehreren deratigen Sensoren, ein Verfahren zum ggf. selbstlernenden Planen von Messintervallen und zum ggf. selbstlernenden Powermanagement eines Sensors, ein Programmelement, ein computerlesbares Medium und die Verwendung einer Recheneinheit in einem Messsystem.

### Hintergrund

In der Prozessautomatisierung im industriellen Umfeld werden Sensoren, wie beispielsweise Füllstandsensoren, Grenzstandsensoren, Drucksensoren oder Durchflusssensoren eingesetzt. Um Energie zu sparen, werden derartige Sensoren zyklisch oder nach einem fest vorgegebenen Zeitraster eingeschaltet und der Messvorgang ausgelöst. Danach werden die Sensoren wieder ausgeschaltet oder in einen niedrigenergetischen (Iow power) Standby-Modus versetzt.

US2008/0221836A1 beschreibt eine Vielzahl von mobilen Sensorvorrichtungen, die jeweils periodisch die Eigenschaften ihrer Umgebung messen und die Änderungsrate dieser Eigenschaft bestimmen.

US2016/0047679A1 betrifft Techniken und Konfigurationen für eine Vorrichtung zur Reduzierung des Energieverbrauchs von Sensoren durch vorausschauende Datenmessungen durch einen oder mehrere Sensoren.

US2017/0276527A1 beschreibt die Messung eines Flüssigkeitsstroms und insbesondere ein System und Verfahren zur Gasdosierung.

### Zusammenfassung

Es ist eine Aufgabe der vorliegenden Erfindung, den Energiebedarf von Sensoren zu verringern.

Diese Aufgabe wird durch die Merkmale der unabhängigen Patentansprüche gelöst. Weiterbildungen der Erfindung ergeben sich aus den Unteransprüchen und der folgenden Beschreibung von Ausführungsformen.

Ein erster Aspekt der vorliegenden Offenbarung betrifft einen, ggf. selbstlernenden, Sensor, der eine Steuereinheit aufweist, die eingerichtet ist zur Analyse von dem Sensor verfügbaren Daten, insbesondere von Messdaten des Sensors und/oder weiterer Daten, zum Erzeugen von Powermanagementdaten. Die Powermanagementdaten sind zur Auswahl eines Stromsparmodus eines Funkmoduls des Sensors aus mehreren verfügbaren Stromsparmodi und/oder zur Steuerung der Zeiten von Messintervallen des Sensors und/oder zum Powermanagement des Sensors ausgeführt, wobei die Steuereinheit (101) bei der Analyse der von dem Sensor verfügbaren Daten und bei der Auswahl des Stromsparmodus aus den mehreren verfügbaren Stromsparmodi die bei Betrieb des Stromsparmodus benötigte Energie berücksichtigt.

Der Begriff "Steuereinheit" ist breit auszulegen. Bei der Steuereinheit kann es sich um eine zusammenhängende Einheit handeln; sie kann aber auch verteilt im Sensor und/oder seiner Umgebung angeordnet sein, beispielsweise in der Cloud. Bei der Steuereinheit handelt es sich beispielsweise um eine elektrische Schaltung, die einen Prozessor aufweist.

Gemäß einer Ausführungsform umfassen die mehreren verfügbaren Stromsparmodi einen Power Saving Modus, PSM.

Gemäß einer Ausführungsform umfassen die mehreren verfügbaren Stromsparmodi einen extended discontinuous reception, eDRX, Modus.

Gemäß einer Ausführungsform umfassen die mehreren verfügbaren Stromsparmodi die Deaktivierung des Funkmoduls.

Gemäß einer Ausführungsform ist die Steuereinheit eingerichtet, bei der Analyse der von dem Sensor verfügbaren Daten und bei der Auswahl des Stromsparmodus aus den mehreren verfügbaren Stromsparmodi die maximal zulässige Dauer im Stromsparmodus, bis wieder eine Kommunikation stattfinden muss, zu berücksichtigen.

Gemäß einer Ausführungsform ist die Steuereinheit eingerichtet, bei der Analyse der von dem Sensor verfügbaren Daten und bei der Auswahl des Stromsparmodus aus den mehreren verfügbaren Stromsparmodi die für eine Neuregistrierung oder Neueinwahl in das Kommunikationsnetz notwendige Energie zu berücksichtigen.

Gemäß einer Ausführungsform ist die Steuereinheit eingerichtet, bei der Analyse der von dem Sensor verfügbaren Daten und bei der Auswahl des Stromsparmodus aus den mehreren verfügbaren Stromsparmodi äußere Einflüsse, wie Temperatur, Auslastung eines Funkkanals oder eine Bewegung des Sensors zu berücksichtigen.

Gemäß einer Ausführungsform ist die Steuereinheit eingerichtet, bei der Analyse der von dem Sensor verfügbaren Daten und bei der Auswahl des Stromsparmodus aus den mehreren verfügbaren Stromsparmodi die Häufigkeit der aktuellen Messungen zu berücksichtigen.

Gemäß einer Ausführungsform umfassen die den Sensor verfügbaren Daten auch Messdaten eines benachbarten Sensors, Umweltdaten, Lagedaten und/oder Ortsdaten des Sensors oder einer externen Sensorik, Signale eines externen Aktuators, wie einer Pumpe, Signale einer externen Steuerung oder eines mobilen Endgeräts und/oder Kalendereinträge, Informationen über Feiertage, werksfreie Tage oder Zeiten, an denen mit beispielsweise einer Befüllung eines Behälters zu rechnen ist.

Gemäß einer weiteren Ausführungsform ist die Steuereinheit eingerichtet, auf Basis der Analyse der dem Sensor verfügbaren Daten die Häufigkeit zukünftiger Messintervalle in einem bestimmten Zeitintervall zu reduzieren oder zu erhöhen. Kommt die Steuereinheit bei ihrer Analyse beispielsweise zu dem Ergebnis, dass in einem bestimmten zukünftigen Zeitintervall mit keiner Änderung der Messdaten zu rechnen ist, weil beispielsweise der Füllstand in einem Behälter konstant bleibt, kann die Anzahl der Messintervalle in diesem Zeitintervall reduziert oder sogar auf null gesetzt werden. Kommt die Steuereinheit allerdings zu dem Ergebnis, dass während eines bestimmten, zukünftigen Zeitintervalls sehr wohl mit einer Änderung der Messdaten zu rechnen ist, beispielsweise weil der Behälter befüllt oder entleert wird, kann sie die Häufigkeit der Messintervalle in diesem Zeitintervall erhöhen.

Gemäß einer weiteren Ausführungsform ist die Steuereinheit eingerichtet, auf Basis der Analyse der dem Sensor verfügbaren Daten ein erstes Zeitintervall zu bestimmen, in welchem eine Änderung der Messdaten des Sensors zu erwarten ist, und ein oder mehrere zukünftige Messintervalle in diesem ersten Zeitintervall einzuplanen. Hierfür kann eine schnelle, energiesparende und nicht sehr genaue Vormessung durchgeführt werden, um zu erkennen, ob sich der Füllstand überhaupt geändeert haben könnte, so dass zusätzliche Daten für die Steuerung erzeugt werden.

Gemäß einer weiteren Ausführungsform ist die Steuereinheit eingerichtet, auf Basis der Analyse der dem Sensor verfügbaren Daten ein zweites Zeitintervall zu bestimmen, in welchem keine Änderung der Messdaten des Sensors zu erwarten ist, und die Anzahl der in diesem zweiten Zeitintervall eingeplanten zukünftigen Messintervalle zu reduzieren.

Gemäß einer weiteren Ausführungsform ist die Steuereinheit eingerichtet, auf Basis der Analyse der dem Sensor verfügbaren Daten die Häufigkeit zukünftiger Messintervalle in einem bestimmten Zeitintervall in Abhängigkeit von einer in diesem Zeitintervall zu erwartenden Änderungsrate der Messdaten anzupassen. Beispielsweise kann vorgesehen sein, dass, wenn die Steuereinheit zu dem Ergebnis gelangt, dass die zu erwartende Änderungsrate recht hoch ist, die Häufigkeit zukünftiger Messintervalle in diesem Zeitintervall weiter erhöht wird, und umgekehrt.

Gemäß einer weiteren Ausführungsform weist der ggf. selbstlernende Sensor einen internen Energiespeicher auf und ist zum autarken Betrieb eingerichtet.

Insbesondere kann eine Funkschnittstelle vorgesehen sein, mittels welcher der ggf. selbstlernende Sensor mit einer externen Steuereinheit oder einer externen Recheneinheit kommunizieren kann. Der Sensor kann eingerichtet sein, zu bestimmten Zeitpunkten Messdaten an eine solche externe Einheit zu übertragen.

Es kann vorgesehen sein, dass die externe Einheit hierbei die Analyseaufgaben oder zumindest einen Teil der Analyseaufgaben übernimmt und dem Sensor dann seine individuellen, neuen Powermanagementdaten aufspielt.

Insbesondere kann vorgesehen sein, dass die externe Einheit mit einer Vielzahl an Sensoren kommuniziert und von diesen Daten sammelt. Sie kann auch weitere Daten sammeln, beispielsweise Kalendereinträge etc. und daraus dann für jeden einzelnen Sensor eigene Powermanagementdaten erzeugen, die diesem Sensor dann eingespielt werden. Dieser Prozess kann selbstlernend und automatisiert implementiert sein, so dass die Sensoren nach und nach mehr und mehr Energie sparen und (in anderen Worten) keine "unnötigen" Messungen mehr durchführen bzw. sich die Anzahl dieser unnötigen Messungen immer weiter verringert. "Unnötige" Messungen sind in diesem Zusammenhang insbesondere solche Messungen, welche nicht zu einem neuen, im Gegensatz zu einem vorherigen Messergebnis geänderten Messergebnis führen, beispielsweise weil sich der Füllstand nicht geändert hat oder er sich nur sehr langsam geändert hat.

Insbesondere kann der ggf. selbstlernende Sensor zur Prozessautomatisierung im industriellen Umfeld eingerichtet sein.

Bei dem Sensor kann es sich beispielsweise um einen Füllstandsensor, einen Grenzstandsensor, einen Durchflusssensor oder einen Drucksensor handeln. Insbesondere um einen Radarsensor, einen Ultraschallsensor, einen radiometrischen Sensor, einen Vibrationssensor, einen kapazitiven Sensor oder einen konduktiven Sensor.

Ein weiterer Aspekt betrifft eine Steuereinheit für einen ggf. selbstlernenden Sensor, eingerichtet zur Analyse von dem Sensor verfügbaren Daten, insbesondere von Messdaten des Sensors, zum Erzeugen von Powermanagementdaten, wobei die Powermanagementdaten zur Auswahl eines Stromsparmodus eines Funkmoduls des Sensors aus mehreren verfügbaren Stromsparmodi und/oder zur Steuerung der Zeiten von Messintervallen des Sensors und/oder zum Powermanagement des Sensors ausgeführt sind wobei die Steuereinheit (101) bei der Analyse der von dem Sensor verfügbaren Daten und bei der Auswahl des Stromsparmodus aus den menreren verfügbaren Stromsparmodi die bei Betrieb des Stromsparmodus benötigte Energie berücksichtigt.

Insbesondere kann vorgesehen sein, dass die Steuereinheit entfernt vom Sensor angeordnet ist und mit diesem über eine drahtgebundene Schnittstelle oder eine Funkschnittstelle Daten austauschen kann.

Ein weiterer Aspekt der vorliegenden Offenbarung betrifft ein Messsystem, eingerichtet zum selbstständigen Erzeugen von Powermanagementdaten zur ggf. selbstlernenden Steuerung von Messintervallen und zum selbstlernenden Powermanagement von Sensoren. Das Messsystem weist einen oder mehrere selbstlernende, oben und im Folgenden beschriebene Sensoren auf, sowie eine oben und im Folgenden beschriebene Steuereinheit und/oder eine oben und im Folgenden beschriebene Recheneinheit, welche eingerichtet ist zum Speichern der Powermanagementdaten und zur Weitergabe der gespeicherten Powermanagementdaten an einen neuen Sensor des Messsystems.

Es kann vorgesehen sein, dass, wenn ein neuer Sensor dem Messsystem hinzugefügt wird, dieser bei seiner Inbetriebnahme automatisch seine individuellen Powermanagementdaten von der Recheneinheit oder der Steuereinheit aufgespielt bekommt. Der einzelne Sensor kann in diesem Fall relativ schlank ausgeführt sein und ist im einfachsten Fall lediglich in der Lage, die Steuerbefehle, die in den eingespielten Powermanagementdaten enthalten sind, auszuführen und dementsprechende Messungen durchzuführen, sowie die Messergebnisse zu bestimmten Zeitpunkten an eine externe Einheit zu übertragen.

Ein weiterer Aspekt der vorliegenden Offenbarung betrifft ein Verfahren zum ggf. selbstlernenden Planen von Messintervallen und zum ggf. selbstlernenden Powermanagement eines Sensors, bei dem die dem Sensor verfügbaren Daten analysiert werden, insbesondere Messdaten des Sensors, zum Erzeugen von Powermanagementdaten, wobei die Powermanagementdaten zur Auswahl eines Stromsparmodus eines Funkmoduls des Sensors aus mehreren verfügbaren Stromsparmodi und/oder zur Steuerung der Zeiten von Messintervallen des Sensors und/oder zum Powermanagement des Sensors ausgeführt sind, wobei die Steuereinheit (101) bei der Analyse der von dem Sensor verfügbaren Daten und bei der Auswahl des Stromsparmodus aus den mehreren verfügbaren Stromsparmodi die bei Betrieb des Stromsparmodus benötigte Energie berücksichtigt.

Ein weiterer Aspekt betrifft ein Programmelement, das, wenn es auf einer Steuereinheit eines ggf. selbstlernenden Sensors oder einer oben und im Folgenden beschriebenen Recheneinheit ausgeführt wird, die Steuereinheit bzw. die Recheneinheit anleitet, die oben beschriebenen Schritte durchzuführen.

Ein weiterer Aspekt betrifft ein computerlesbares Medium, auf dem ein oben beschriebenes Programmelement gespeichert ist.

Ein weiterer Aspekt betrifft die Verwendung einer Recheneinheit in einem Messsystem, zum Speichern der Powermanagementdaten und zur Weitergabe der gespeicherten Powermanagementdaten an einen neuen Sensor des Messsystems.

Unter dem Begriff "Prozessautomatisierung im industriellen Umfeld" kann ein Teilgebiet der Technik verstanden werden, welches alle Maßnahmen zum Betrieb von Maschinen und Anlagen ohne Mitwirkung des Menschen beinhaltet. Ein Ziel der Prozessautomatisierung ist es, das Zusammenspiel einzelner Komponenten einer Werksanlage in den Bereichen Chemie, Lebensmittel, Pharma, Erdöl, Papier, Zement, Schifffahrt oder Bergbau zu automatisieren. Hierzu können eine Vielzahl an Sensoren eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Grenzstand, Durchfluss, Druck oder Dichte überwacht und Einstellungen für die gesamte Werksanlage manuell oder automatisiert verändert werden können.

Ein Teilgebiet der Prozessautomatisierung im industriellen Umfeld betrifft die Logistikautomation. Mit Hilfe von Distanz- und Winkelsensoren werden im Bereich der Logistikautomation Abläufe innerhalb eines Gebäudes oder innerhalb einer einzelnen Logistikanlage automatisiert. Typische Anwendungen finden z.B. Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemein ist den zuvor aufgezählten Beispielen, dass eine Präsenzerkennung in Kombination mit einer genauen Vermessung der Größe und der Lage eines Objektes von der jeweiligen Anwendungsseite gefordert wird. Hierfür können Sensoren auf Basis optischer Messverfahren mittels Laser, LED, 2D-Kameras oder 3D-Kameras, die nach dem Laufzeitprinzip (time of flight, ToF) Abstände erfassen, verwendet werden.

Ein weiteres Teilgebiet der Prozessautomatisierung im industriellen Umfeld betrifft die Fabrik-/Fertigungsautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar.

Das Programmelement kann beispielsweise in einem Arbeitsspeicher einer Datenverarbeitungseinrichtung, wie etwa eines Datenprozessors geladen und/oder gespeichert sein, wobei die Datenverarbeitungseinrichtung auch Teil einer Ausführungsform der vorliegenden Erfindung sein kann. Diese Datenverarbeitungseinrichtung kann dazu eingerichtet sein, Verfahrensschritte des oben beschriebenen Verfahrens durchzuführen. Die Datenverarbeitungseinrichtung kann ferner dazu eingerichtet sein, das Computerprogramm bzw. das Verfahren automatisch auszuführen und/oder Eingaben eines Benutzers auszuführen. Das Computerprogramm kann auch über ein Datennetzwerk, wie etwa das Internet, bereitgestellt und von einem solchen Datennetzwerk aus in den Arbeitsspeicher der Datenverarbeitungseinrichtung heruntergeladen werden. Das Computerprogramm kann auch eine Aktualisierung eines bereits vorhandenen Computerprogramms umfassen, wodurch das vorhandene Computerprogramm beispielsweise zum Ausführen des oben beschriebenen Verfahrens befähigt werden kann.

Das computerlesbare (Speicher)Medium kann insbesondere, aber nicht notwendigerweise, ein nichtflüchtiges Medium sein, das sich insbesondere zum Speichern und/oder Verteilen eines Computerprogramms eignet. Das computerlesbare Speichermedium kann eine CD-ROM, eine DVD-ROM, ein optisches Speichermedium, ein Festkörpermedium oder ähnliches sein, das zusammen mit oder als Teil anderer Hardware geliefert wird. Zusätzlich oder alternativ dazu, kann das computerlesbare Speichermedium auch in anderer Form verteilt bzw. vertrieben werden, beispielsweise über ein Datennetzwerk, wie etwa das Internet oder andere drahtgebundene oder drahtlose Telekommunikationssysteme. Hierzu kann das computerlesbare Speichermedium beispielsweise als ein oder mehrere Datenpakete ausgeführt sein.

Im Folgenden werden mit Verweis auf die Figuren weitere Ausführungsformen beschrieben. Die Darstellungen in den Figuren sind schematisch und nicht maßstäblich. Werden in der folgenden Figurenbeschreibung die gleichen Bezugszeichen verwendet, so bezeichnen diese gleiche oder ähnliche Elemente.

### Kurze Beschreibung der Figuren

Fig. 1 zeigt ein Zeitdiagramm von Messintervallen zweier Sensoren.
Fig. 2 zeigt ein weiteres Zeitdiagramm von Messintervallen.
Fig. 3 zeigt eine Übersicht mit Beispielen für mögliche Datenquellen für selbstlernende Sensoren.
Fig. 4 zeigt ein Messsystem gemäß einer Ausführungsform.
Fig. 5 zeigt ein Flussdiagramm eines Verfahrens gemäß einer Ausführungsform.

### Detaillierte Beschreibung von Ausführungsformen

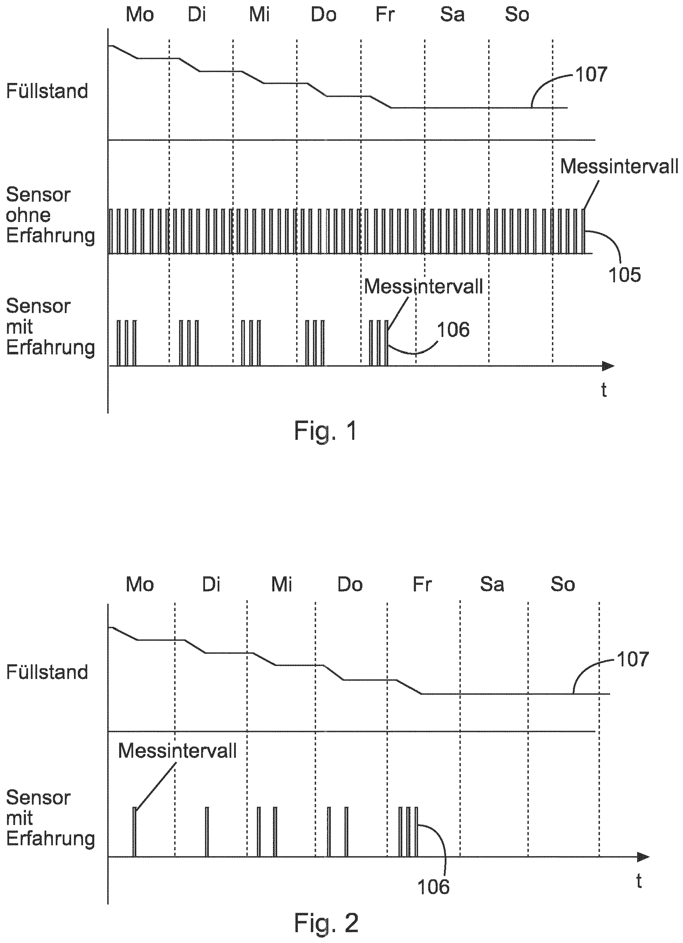

Fig. 1 zeigt ein Zeitdiagramm der Messintervalle 105 eines Sensors vor dem Selbstlernprozess, sowie der Messintervalle 106 eines ggf. selbstlernenden Sensors während oder nach einem oben beschriebenen Selbstlernprozess mit intelligentem Powermanagement.

Die Messkurve 107 zeigt den Verlauf der vom Sensor erfassten Messdaten (beispielsweise ein Füllstand, ein Druck oder ein Durchfluss) in Abhängigkeit von der Zeit. Über die Wochentage Montag bis Sonntag sinkt der Füllstand, wobei er von Freitagnachmittag an bis Montag morgens konstant bleibt.

Der Sensor "ohne Erfahrung" wird in einem fest vorgegebenen Zeitraster betrieben, mit konstanten Zeitabständen zwischen den einzelnen Messintervallen 105. Dies sorgt für einen intensiven Energieverbrauch und kann einen regelmäßigen, frühzeitigen Austausch von verbrauchten Batterien oder Akkumulatoren zur Folge haben. Dies erfordert Wartungsaufwand oder sogar einen Neukauf oder Neumontage der Sensoren, falls ein Austausch der Energiespeicher nicht möglich ist.

Durch den ggf. selbstlernenden Prozess lernt der Sensor, nicht nach einem fest vorgegebenen starren Zeitraster zu messen, sondern immer nur dann, wenn eine Messung notwendig erscheint. Somit lässt sich der Energieverbrauch der Sensoren deutlich reduzieren.

Auf diese Weise kann ein wartungsarmes und energiesparendes Sensorsystem (Messsystem) mit ggf. selbstlernenden Sensoren implementiert werden, wobei jeder Sensor eigene Powermanagementdaten errechnet oder übermittelt bekommt, welche regelmäßig an die Messumgebung angepasst werden.

Die Messintervalle 106 zeigen, dass der Sensor "mit Erfahrung" gelernt hat, nur in denjenigen Zeitintervallen zu messen, während denen sich die Messdaten auch ändern, die Kurve 107 also eine Steigung und gleich null aufweist (weil der Füllstand fällt). Während der Plateaus wird nicht gemessen.

Fig. 2 zeigt ein weiteres Beispiel für die zeitliche Verteilung der Messintervalle. Auch hier wird nur in denjenigen Zeitintervallen gemessen, in welchen der Füllstand sinkt. Je niedriger der Füllstand ist (insbesondere am Freitag), desto häufiger wird während der Entleerung gemessen, damit vermieden werden kann, dass der Behälter leerläuft.

Die Messungen werden durch intelligente Messintervalle und Powermanagement ausgelöst.

Somit kann der Energieverbrauch der kompletten Messstelle deutlich verringert werden. An arbeitsfreien Tagen, oder wenn sich ein Tank im Lager des Silobefüllers befindet, erfolgt keine Messung.

Die ggf. selbstlernenden Messintervalle können zum Beispiel durch folgende Daten erzeugt werden:
Analyse der eigenen Füllstands-Messdaten (Tag, Nacht, Pausenzeiten, Tankinhalt (bei vollem Tank weniger Messungen), Entleervorgang (bei kleinen Entnahmemengen weniger Messungen));
Analyse der Messdaten aus einem Sensorverbund;
Analyse durch interne oder externe Sensorik (zum Beispiel Umwelt-, Lage- oder Ortsdaten);
Analyse durch externe Signale von externen Aktoren (zum Beispiel Pumpe), Steuerungen oder mobile Endgeräte;
Analyse vorgegebener Einstellungen oder Kalender (zum Beispiel Wochenende, Feiertage, Betriebsferien).

Der Sensor kann eingerichtet sein, die optimalen Zeitpunkte zum Messen selbstständig durch Erfahrung aus den oben genannten Daten zu erlernen.

Dadurch kann die Batterielaufzeit und/oder die Sensorlebenszeit verlängert werden.

Der Sensor wird durch seinen Selbstlernprozess und den immer länger fortlaufenden Zeitraum des Selbstlernens intelligenter und effektiver in seiner Energieeinsparung.

Es kann vorgesehen sein, dass der Sensor bei unvorhergesehenen Füllstandsänderungen den Zeitpunkt und die Länge des Messintervalls sowie die Häufigkeit der Messungen in diesem Messintervall automatisch entsprechend anpasst. Ein Beispiel hierfür ist vorübergehende Samstagsarbeit. An darauffolgenden Samstagen wird eine Messung ausgeführt, bis keine Füllstandsänderungen an Samstagen mehr auftreten.

Insbesondere kann vorgesehen sein, dass die Erfahrungswerte eines Sensors auf andere Sensoren des Kunden übertragen werden. Die Erfahrungswerte des Sensors/der Sensoren können lokal oder dezentral in einer Cloud zur weiteren Verarbeitung abgelegt werden. Das Auslösen der Messung durch intelligente Messintervalle und Powermanagement kann in autarken Sensoren mit Energiespeicher sowie in kabelgebundenen Sensoren eingesetzt werden. Die Sensoren können fest installiert sein oder ortsveränderlich eingesetzt werden.

Das Modul der Erzeugung der intelligenten Messintervalle und Powermanagement kann im Sensor fest integriert sein oder als eine Erweiterung bestehender Messstellen eingesetzt werden.

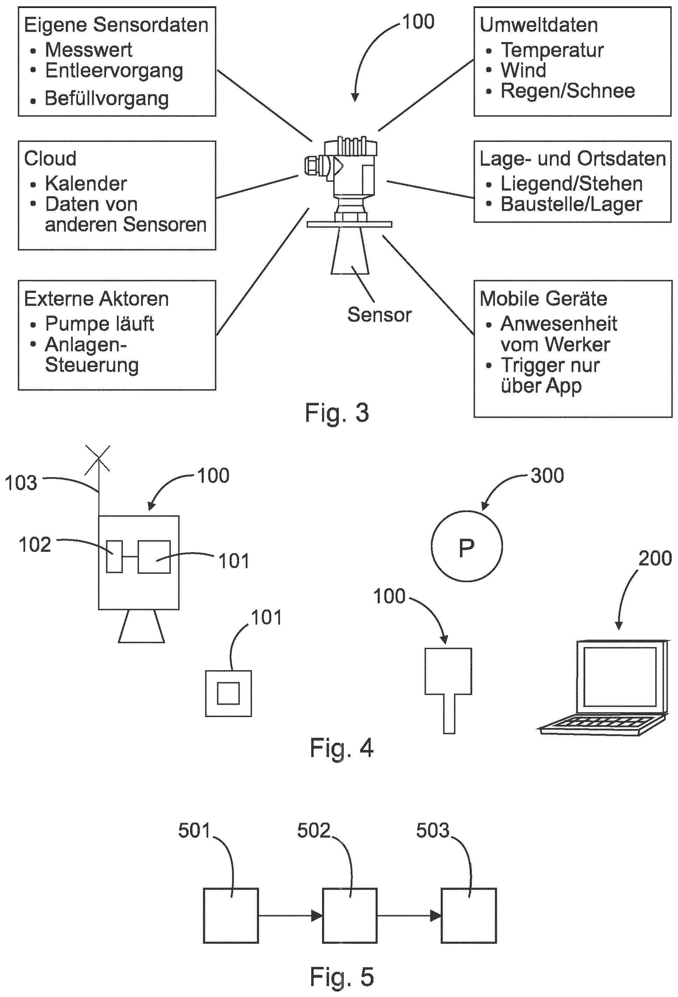

Fig. 3 zeigt Beispiele für mögliche Datenquellen für einen ggf. selbstlernenden Sensor 100.

Eine mögliche Datenquelle für die von dem Sensor verfügbaren Daten, die für die Analyse herangezogen werden, bilden sensoreigene Daten, wie Messwerte, Informationen über Entleervorgänge und Befüllvorgänge.

Ein weiteres Beispiel sind die in einem externen Datenspeicher verfügbaren Daten, beispielsweise in einer Cloud. Hierbei handelt es sich beispielsweise um Kalendereinträge, Kalenderdaten oder Daten von anderen Sensoren.

Ein weiteres Beispiel sind Daten und Signale externer Aktoren (beispielsweise "Pumpe läuft" oder "Anlagensteuerung").

Ein weiteres Beispiel sind Umweltdaten, wie Temperatur, Wind, Regen, Schnee.

Ein weiteres Beispiel sind Lage- und Ortsdaten, wie Informationen darüber, ob der Sensor liegend oder stehend verbaut ist bzw. der Behälter liegt oder aufrecht steht, oder ob sich der Behälter auf einer Baustelle oder in einem Lager befindet.

Ein weiteres Beispiel sind die Daten mobiler Geräte, wie die Anwesenheit von Bedienpersonal oder ein Triggersignal über eine App.

Fig. 4 zeigt ein Messsystem mit mehreren ggf. selbstlernenden Sensoren 100, einem neuen Sensor 300, einer Steuereinheit 101, die sich in einem der ggf. selbstlernenden Sensoren befindet, einer weiteren Steuereinheit 101, die sich außerhalb der ggf. selbstlernenden Sensoren befindet, sowie einer zentralen Recheneinheit 200.

Die Recheneinheit ist eingerichtet, von sämtlichen Sensoren Daten zu empfangen und diese zentral auszuwerten. Sie kann darüber hinaus auch eingerichtet sein, die hinsichtlich Fig. 3 beschriebenen Daten zu sammeln und in die Analyse mit einzubeziehen, um für jeden Sensor individuelle Powermanagementdaten zu generieren, die dann an die Sensoren übertragen werden können. Der Sensor 100 weist insbesondere ein Funkmodul 103 auf, welches für die Messdatenübertragung verwendet wird.

Autarke Sensoren 100 mit Mobilfunkmodulen (Mobilfunkmodems, Mobilfunkchips für zum Beispiel "NB-IoT", "LTE-M1" usw.) müssen sich vor dem ersten Versand von Daten beim Netzbetreiber einwählen. Hierbei wird eine Datenverbindung und Registrierung beim entsprechenden Netzbetreiber, über einen Mobilfunkmasten durchgeführt. Solange das Gerät im Netz registriert ist, entfällt eine erneute Einwahl, wodurch Energie eingespart wird. Hierbei muss das Funkmodul 103 dauerhaft mit Energie versorgt werden, um regelmäßig mit dem Funkmasten kommunizieren zu können.

Wird für eine längere Zeit keine Datenkommunikation benötigt, kann das Funkmodul in einen Stromsparmodus (z.B. eDRX, PSM,....) gesetzt werden, wodurch der benötigte Strom des Funkmoduls von Milliampere auf wenige Mikroampere reduziert werden kann. Auch in diesen Modi entfällt das neue Einwählen im Mobilfunknetz.

Bei autarken Sensoren wird hierdurch die Batterielaufzeit deutlich erhöht. Bei netzbetriebenen (230 V) oder durch eine Schnittstelle (4-20 mA) versorgte Sensoren reduziert sich die Leistungsaufnahme.

Wird der Sensor 100 für eine sehr lange Zeit nicht benötigt, ist es vorteilhaft, das Funkmodul 103 vollständig zu deaktivieren, um sich den Strombedarf von wenigen Mikroampere im Stromsparmodus zu sparen. Hierdurch wird es jedoch notwendig sich vor dem Versand von Daten neu im Mobilfunknetz zu registrieren.

Autarke Sensoren senden meist nur zu festgelegten Zeitpunkten Daten per Mobilfunk. Beispielsweise Werktags alle zwei Stunden von 8:00 Uhr bis 16:00 Uhr. Nachts und an Wochenenden jedoch nicht oder nur alle acht Stunden. Hierdurch kann es Vorteilhaft sein, das Mobilfunkmodul für eine lange Ruhedauer auszuschalten bzw. zu deaktivieren.

Einer oder mehrerer der nachfolgenden Faktoren können zur Entscheidungsfindung, welcher der Stromsparmodi genutzt oder ausgeschalten wird, einbezogen werden. Nicht nur der aktuelle Wert eines Faktors, sondern auch der/die historischen/alten Werte, sowie die zukünftig erwartbaren Werte können berücksichtigt werden:
1. Zur Verfügung stehende Stromsparmodi (eDRX, PSM oder ....)
2. Benötigte Energie im jeweiligen Stromsparmodus; diese kann im Betrieb gemessen/ermittelt sein oder ein erwarteter Wert (Default) sein.
3. Verwendete Mobilfunktechnik (NB-IoT, LTE-M1,...).
4. Gewünschte/Geplante Zeit im Stromsparmodus.
5. Maximal zulässige Dauer im jeweiligen Stromsparmodus, bis wieder eine Kommunikation stattfinden muss (wird vom Netzbetreiber festgelegt).
6. Verwendetes Band zur Kommunikation (Ist das zu verwendete Band bekannt? Anzahl der Bänder, die für die Einwahl getestet werden; Unterschiedlicher Leistungsbedarf bei unterschiedlichen Bändern).
7. Benötigte Energie für eine Neuregistrierung/Einwahl (im Betrieb gemessen/ermittelt; erwarteter Wert (Default); vereinfacht kann hier die Zeitdauer für eine Einwahlvorgang genutzt werden (gemessen oder vorgegeben)).
8. Sendeleistung bei einer Einwahl.
9. Empfangsqualität der Mobilfunkstrecke.
10. Welcher Stromsparmodus ist vorteilhafter für die Energieversorgung? Ist die Energieversorgung für den geringen Strombedarf im Stromsparmodus ausgelegt bzw. effizient (Wirkungsgrad)? Kann beispielsweise eine Passivierung einer Lithium-Thionylchlorid-Batterie verhindert werden?
11. Äußerer Einflüsse, wie Temperatur, Auslastung des Funkkanals, Bewegung des Sensors und ein damit verbundener Funkzellenwechsel. Bewegt sich der Sensor gerade? Wird sich der Sensor vermutlich oder mit Sicherheit bewegen?

Durch die oben aufgezählten Faktoren kann auch die Auswahl des zu verwendeten Stromsparmodus (eDRX, PSM usw.) verändert werden.

Somit wird ein Verfahren zur Entscheidungsfindung der Auswahl von Stromsparmodi oder der Deaktivierung von Mobilfunkmodulen zur Optimierung der Laufzeit von autarken Sensoren oder zur Reduzierung der Leistungsaufnahme bei ständig versorgten Sensoren bereitgestellt.

Beispielsweise ist die Steuereinheit 101 wie folgt programmiert: Es werden Werktags von 8:00 Uhr bis 16:00 Uhr alle zwei Stunden Daten per Mobilfunk versendet. Werktags von 16:00 Uhr 8:00 Uhr werden alle vier Stunden Daten gesendet. An Wochenenden und Feiertagen liegt der Rythmus zwischen dem Datensenden bei acht Stunden.

Durch die Nutzung mehrerer der oben genannten Faktoren wurde vom Sensor bzw. der Steuereinheit errechnet, dass der Stromsparmodus PSM im zwei Stunden Rhythmus energetisch einen Vorteil bringt. Bei einem Rhythmus von vier Stunden wird das Gerät im Stromsparmodus eDRX betrieben. Ab einer Sendepause von sechs Stunden wird das Funkmodul deaktiviert, um den Ruhestrom von mehreren Mikroampere einzusparen.

Fig. 5 zeigt ein Flussdiagramm eines Verfahrens gemäß einer Ausführungsform. In Schritt 501 wird eine Vielzahl an Daten gesammelt. In Schritt 502 werden diese Daten zentral analysiert (oder sie werden von einem Sensor analysiert) und in Schritt 503 werden daraus Powermanagementdaten erzeugt. Diese Powermanagementdaten weisen Befehle zur Auswahl eines Stromsparmodus des Funkmoduls aus mehreren verfügbaren Stromsparmodi und/oder zur Steuerung der Zeiten von Messintervallen der Sensoren und/oder zum Powermanagement der Sensoren auf.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Sensor (100), aufweisend:
eine Steuereinheit (101), eingerichtet zur Analyse von dem Sensor verfügbaren Daten, insbesondere von Messdaten des Sensors, zum Erzeugen von Powermanagementdaten;
ein Funkmodul (103), eingerichtet zur Übertragung von Messdaten;
wobei die Powermanagementdaten zur Auswahl eines Stromsparmodus des Funkmoduls (103) aus mehreren verfügbaren Stromsparmodi und/oder zur Steuerung der Zeiten von Messintervallen des Sensors und/oder zum Powermanagement des Sensors ausgeführt sind;
wobei die Steuereinheit (101) bei der Analyse der von dem Sensor verfügbaren Daten und bei der Auswahl des Stromsparmodus aus den mehreren verfügbaren Stromsparmodi die bei Betrieb des Stromsparmodus benötigte Energie berücksichtigt.

2. Sensor (100) nach Anspruch 1,
wobei die mehreren verfügbaren Stromsparmodi einen Power Saving Modus, PSM, umfassen.

3. Sensor (100) nach einem der vorhergehenden Ansprüche,
wobei die mehreren verfügbaren Stromsparmodi einen extended discontinuous reception, eDRX, Modus umfassen.

4. Sensor (100) nach einem der vorhergehenden Ansprüche,
wobei die mehreren verfügbaren Stromsparmodi die Deaktivierung des Funkmoduls (103) umfassen.

5. Sensor (100) nach einem der vorhergehenden Ansprüche,
wobei die Steuereinheit (101) bei der Analyse der von dem Sensor verfügbaren Daten und bei der Auswahl des Stromsparmodus aus den mehreren verfügbaren Stromsparmodi die maximal zulässige Dauer im Stromsparmodus, bis wieder eine Kommunikation stattfinden muss, berücksichtigt.

6. Sensor (100) nach einem der vorhergehenden Ansprüche,
wobei die Steuereinheit (101) bei der Analyse der von dem Sensor verfügbaren Daten und bei der Auswahl des Stromsparmodus aus den mehreren verfügbaren Stromsparmodi die für eine Neuregistrierung oder Neueinwahl in das Kommunikationsnetz notwendige Energie berücksichtigt.

7. Sensor (100) nach einem der vorhergehenden Ansprüche,
wobei die Steuereinheit (101) bei der Analyse der von dem Sensor verfügbaren Daten und bei der Auswahl des Stromsparmodus aus den mehreren verfügbaren Stromsparmodi äußere Einflüsse, wie Temperatur, Auslastung eines Funkkanals oder eine Bewegung des Sensors berücksichtigt.

8. Sensor (100) nach einem der vorhergehenden Ansprüche,
wobei die Steuereinheit (101) bei der Analyse der von dem Sensor verfügbaren Daten und bei der Auswahl des Stromsparmodus aus den mehreren verfügbaren Stromsparmodi die Häufigkeit der aktuellen Messungen berücksichtigt.

9. Steuereinheit (101) für einen Sensor (100), eingerichtet zur Analyse von dem Sensor verfügbaren Daten, insbesondere von Messdaten des Sensors, zum Erzeugen von Powermanagementdaten;
wobei die Powermanagementdaten zur Auswahl eines Stromsparmodus aus mehreren verfügbaren Stromsparmodi eines Funkmoduls (103) des Sensors und/oder zur Steuerung der Zeiten von Messintervallen des Sensors und/oder zum Powermanagement des Sensors ausgeführt sind;
wobei die Steuereinheit (101) bei der Analyse der von dem Sensor verfügbaren Daten und bei der Auswahl des Stromsparmodus aus den mehreren verfügbaren Stromsparmodi die bei Betrieb des Stromsparmodus benötigte Energie berücksichtigt.

10. Steuereinheit (101) nach Anspruch 9,
wobei die Steuereinheit (101) entfernt vom Sensor (100) angeordnet ist.

11. Messsystem, eingerichtet zum selbständigen Erzeugen von Powermanagementdaten zur Steuerung von Messintervallen und zum Powermanagement von Sensoren (100, 300), aufweisend:
einen oder mehrere Sensoren (100) nach einem der Ansprüche 1 bis 8;
eine Steuereinheit (101) nach einem der Ansprüche 9 oder 10 und/oder eine Recheneinheit (200), jeweils eingerichtet zum Speichern der Powermanagementdaten und zur Weitergabe der gespeicherten Powermanagementdaten an einen neuen Sensor (300) des Messsystems.

12. Verfahren zum Planen von Messintervallen und zum Powermanagement eines Sensors (100), aufweisend den Schritt:
Analyse von dem Sensor verfügbaren Daten, insbesondere von Messdaten des Sensors, zum Erzeugen von Powermanagementdaten;
wobei die Powermanagementdaten zur Auswahl eines Stromsparmodus aus mehreren verfügbaren Stromsparmodi eines Funkmoduls (103) des Sensors und/oder zur Steuerung der Zeiten von Messintervallen des Sensors und/oder zum Powermanagement des Sensors ausgeführt sind;
wobei bei der Analyse der von dem Sensor verfügbaren Daten und bei der Auswahl des Stromsparmodus aus den mehreren verfügbaren Stromsparmodi die bei Betrieb des Stromsparmodus benötigte Energie berücksichtigt wird.

13. Programmelement, das, wenn es auf einer Steuereinheit (101) oder einer Recheneinheit (200) eines Sensors (100) ausgeführt wird, die Steuereinheit oder die Recheneinheit anleitet, den folgenden Schritt durchzuführen:
Analyse von dem Sensor verfügbaren Daten, insbesondere von Messdaten des Sensors, zum Erzeugen von Powermanagementdaten;
wobei die Powermanagementdaten zur Auswahl eines Stromsparmodus aus mehreren verfügbaren Stromsparmodi eines Funkmoduls (103) des Sensors und/oder zur Steuerung der Zeiten von Messintervallen des Sensors und/oder zum Powermanagement des Sensors ausgeführt sind;
wobei bei der Analyse der von dem Sensor verfügbaren Daten und bei der Auswahl des Stromsparmodus aus den mehreren verfügbaren Stromsparmodi die bei Betrieb des Stromsparmodus benötigte Energie berücksichtigt wird.

14. Computerlesbares Medium, auf dem ein Programmelement nach Anspruch 13 gespeichert ist.

15. Verwendung einer Recheneinheit (200) in einem Messsystem (1000) nach Anspruch 11, zum Speichern der Powermanagementdaten und zur Weitergabe der gespeicherten Powermanagementdaten an einen neuen Sensor (300) des Messsystems.

## Claims

1. Sensor (100), comprising:
a control unit (101) configured to analyze data available from the sensor, in particular measurement data from the sensor, to generate power management data;
a radio module (103) configured to transmit measurement data;
wherein the power management data is configured to select a power saving mode of the radio module (103) from a plurality of available power saving modes and/or to control the times of measurement intervals of the sensor and/or to manage the power of the sensor;
wherein the control unit (101) takes into account the energy required for operation of the power saving mode when analyzing the data available from the sensor and when selecting the power saving mode from the plurality of available power saving modes.

2. Sensor (100) according to claim 1,
wherein the plurality of available power saving modes include a power saving mode, PSM.

3. Sensor (100) according to any of the preceding claims,
wherein the plurality of available power saving modes include an extended discontinuous reception, eDRX, mode.

4. Sensor (100) according to any of the preceding claims,
wherein the plurality of available power saving modes include deactivation of the radio module (103).

5. Sensor (100) according to any of the preceding claims,
wherein the control unit (101), when analyzing the data available from the sensor and selecting the power saving mode from the plurality of available power saving modes, takes into account the maximum permissible duration in the power saving mode until communication must take place again.

6. Sensor (100) according to one of the preceding claims,
wherein the control unit (101), when analyzing the data available from the sensor and selecting the power saving mode from the plurality of available power saving modes, takes into account the energy required for re-registration or re-dialing into the communication network.

7. Sensor (100) according to one of the preceding claims,
wherein the control unit (101), when analyzing the data available from the sensor and selecting the power saving mode from the plurality of available power saving modes, takes into account external influences such as temperature, radio channel utilization, or movement of the sensor.

8. Sensor (100) according to one of the preceding claims,
wherein the control unit (101), when analyzing the data available from the sensor and selecting the power saving mode from the plurality of available power saving modes, takes into account the frequency of the current measurements.

9. Control unit (101) for a sensor (100), configured to analyze data available from the sensor, in particular measurement data from the sensor, to generate power management data;
wherein the power management data is configured to select a power saving mode from a plurality of available power saving modes of a radio module (103) of the sensor and/or to control the times of measurement intervals of the sensor and/or to manage the power of the sensor;
wherein the control unit (101) takes into account the energy required for operation of the power saving mode when analyzing the data available from the sensor and when selecting the power saving mode from the plurality of available power saving modes.

10. Control unit (101) according to claim 9,
wherein the control unit (101) is located remotely from the sensor (100).

11. Measurement system configured to independently generate power management data for controlling measurement intervals and for power management of sensors (100, 300), comprising:
one or more sensors (100) according to one of claims 1 to 8;
a control unit (101) according to one of claims 9 or 10
and/or a computing unit (200), each configured to store the power management data and to transfer the stored power management data to a new sensor (300) of the measurement system.

12. Method for planning measurement intervals and for power management of a sensor (100), comprising the step of:
analyzing data available from the sensor, in particular measurement data from the sensor, to generate power management data;
wherein the power management data is configured to select a power saving mode from a plurality of available power saving modes of a radio module (103) of the sensor and/or to control the times of measurement intervals of the sensor and/or to manage the power of the sensor;
wherein, when analyzing the data available from the sensor and selecting the power saving mode from the plurality of available power saving modes, the energy required for operation of the power saving mode is taken into account.

13. Program element which, when executed on a control unit (101) or a computing unit (200) of a sensor (100), instructs the control unit or the computing unit to perform the following step:
analyzing data available from the sensor, in particular measurement data from the sensor, to generate power management data;
wherein the power management data is configured to select a power saving mode from a plurality of available power saving modes of a radio module (103) of the sensor and/or to control the times of measurement intervals of the sensor and/or to manage the power of the sensor;
wherein, when analyzing the data available from the sensor and selecting the power saving mode from the plurality of available power saving modes, the energy required to operate the power saving mode is taken into account.

14. Computer-readable medium on which a program element according to claim 13 is stored.

15. Use of a computing unit (200) in a measurement system (1000) according to claim 11 for storing the power management data and for transferring the stored power management data to a new sensor (300) of the measurement system.

## Revendications

1. Capteur (100) présentant :
une unité de commande (101) conçue pour analyser des données disponibles du capteur, en particulier des données de mesure du capteur, afin de générer des données de gestion de l'énergie ;
un module radio (103) conçu pour transmettre des données de mesure ;
dans lequel les données de gestion de l'énergie sont utilisées pour sélectionner un mode d'économie d'énergie du module radio (103) parmi plusieurs modes d'économie d'énergie disponibles et/ou pour commander les durées d'intervalles de mesure du capteur et/ou pour gérer l'énergie du capteur ;
dans lequel l'unité de commande (101) tient compte, lors de l'analyse des données disponibles du capteur et lors de la sélection du mode d'économie d'énergie parmi lesdits plusieurs modes d'économie d'énergie disponibles, de l'énergie nécessaire au fonctionnement du mode d'économie d'énergie.

2. Capteur (100) selon la revendication 1,
dans lequel lesdits plusieurs modes d'économie d'énergie disponibles comprennent un Power Saving Mode, PSM.

3. Capteur (100) selon l'une des revendications précédentes,
dans lequel lesdits plusieurs modes d'économie d'énergie disponibles comprennent un mode extended Discontinuous Reception, eDRX.

4. Capteur (100) selon l'une des revendications précédentes,
dans lequel lesdits plusieurs modes d'économie d'énergie disponibles comprennent la désactivation du module radio (103).

5. Capteur (100) selon l'une des revendications précédentes,
dans lequel l'unité de commande (101) tient compte, lors de l'analyse des données disponibles du capteur et lors de la sélection du mode d'économie d'énergie parmi lesdits plusieurs modes d'économie d'énergie disponibles, de la durée maximale autorisée en mode d'économie d'énergie jusqu'à ce qu'une communication doive à nouveau avoir lieu.

6. Capteur (100) selon l'une des revendications précédentes,
dans lequel l'unité de commande (101) tient compte, lors de l'analyse des données disponibles du capteur et lors de la sélection du mode d'économie d'énergie parmi lesdits plusieurs modes d'économie d'énergie disponibles, de l'énergie nécessaire pour un nouvel enregistrement ou un nouvel accès au réseau de communication.

7. Capteur (100) selon l'une des revendications précédentes,
dans lequel l'unité de commande (101) tient compte, lors de l'analyse des données disponibles du capteur et lors de la sélection du mode d'économie d'énergie parmi lesdits plusieurs modes d'économie d'énergie disponibles, d'influences externes telles que la température, l'utilisation d'un canal radio ou un mouvement du capteur.

8. Capteur (100) selon l'une des revendications précédentes,
dans lequel l'unité de commande (101) tient compte, lors de l'analyse des données disponibles du capteur et lors de la sélection du mode d'économie d'énergie parmi lesdits plusieurs modes d'économie d'énergie disponibles, de la fréquence des mesures actuelles.

9. Unité de commande (101) pour un capteur (100), conçue pour analyser des données disponibles du capteur, en particulier des données de mesure du capteur, afin de générer des données de gestion de l'énergie ;
dans laquelle les données de gestion de l'énergie sont utilisées pour sélectionner un mode d'économie d'énergie parmi plusieurs modes d'économie d'énergie disponibles d'un module radio (103) du capteur et/ou pour commander les durées d'intervalles de mesure du capteur et/ou pour gérer l'énergie du capteur ;
dans laquelle l'unité de commande (101) tient compte, lors de l'analyse des données disponibles du capteur et lors de la sélection du mode d'économie d'énergie parmi lesdits plusieurs modes d'économie d'énergie disponibles, de l'énergie nécessaire au fonctionnement du mode d'économie d'énergie.

10. Unité de commande (101) selon la revendication 9,
dans laquelle l'unité de commande (101) est disposée à distance du capteur (100).

11. Système de mesure, conçu pour générer de manière autonome des données de gestion de l'énergie afin de commander des intervalles de mesure et de gérer l'énergie de capteurs (100, 300), présentant :
un ou plusieurs capteurs (100) selon l'une des revendications 1 à 8 ;
une unité de commande (101) selon l'une des revendications 9 ou 10 et/ou une unité de calcul (200), chacune étant conçue pour stocker les données de gestion de l'énergie et pour transmettre les données de gestion de l'énergie stockées à un nouveau capteur (300) du système de mesure.

12. Procédé pour planifier des intervalles de mesure et pour gérer l'énergie d'un capteur (100), présentant l'étape suivante :
analyse de données disponibles du capteur, en particulier de données de mesure du capteur, pour générer des données de gestion de l'énergie ;
dans lequel les données de gestion de l'énergie sont utilisées pour sélectionner un mode d'économie d'énergie parmi plusieurs modes d'économie d'énergie disponibles d'un module radio (103) du capteur et/ou pour commander les durées d'intervalles de mesure du capteur et/ou pour gérer l'énergie du capteur ;
dans lequel il est tenu compte, lors de l'analyse des données disponibles du capteur et lors de la sélection du mode d'économie d'énergie parmi lesdits plusieurs modes d'économie d'énergie disponibles, de l'énergie nécessaire au fonctionnement du mode d'économie d'énergie.

13. Élément de programme qui, lorsqu'il est exécuté sur une unité de commande (101) ou une unité de calcul (200) d'un capteur (100), amène l'unité de commande ou à l'unité de calcul à mettre en œuvre l'étape suivante :
analyse de données disponibles du capteur, en particulier de données de mesure du capteur, pour générer des données de gestion de l'énergie ;
dans lequel les données de gestion de l'énergie sont utilisées pour sélectionner un mode d'économie d'énergie parmi plusieurs modes d'économie d'énergie disponibles d'un module radio (103) du capteur et/ou pour commander les durées d'intervalles de mesure du capteur et/ou pour gérer l'énergie du capteur ;
dans lequel il est tenu compte, lors de l'analyse des données disponibles du capteur et lors de la sélection du mode d'économie d'énergie parmi lesdits plusieurs modes d'économie d'énergie disponibles, de l'énergie nécessaire au fonctionnement du mode d'économie d'énergie.

14. Support lisible par ordinateur sur lequel est stocké un élément de programme selon la revendication 13.

15. Utilisation d'une unité de calcul (200) dans un système de mesure (1000) selon la revendication 11, pour stocker les données de gestion de l'énergie et pour transmettre les données de gestion de l'énergie stockées à un nouveau capteur (300) du système de mesure.
